**Europäisches Patentamt**

**European Patent Office**

**Office européen des brevets**

(11) Veröffentlichungsnummer: **0 103 180**
**A1**

# EUROPÄISCHE PATENTANMELDUNG

(21) Anmeldenummer: 83107966.0

(22) Anmeldetag: 11.08.83

(51) Int. Cl.³: **H 02 M 9/02**, H 02 M 9/04, H 01 C 7/02

(30) Priorität: 20.08.82 DE 3231066

(43) Veröffentlichungstag der Anmeldung: 21.03.84 Patentblatt 84/12

(84) Benannte Vertragsstaaten: **AT DE FR GB IT SE**

(71) Anmelder: **SIEMENS AKTIENGESELLSCHAFT, Berlin und München Wittelsbacherplatz 2, D-8000 München 2 (DE)**

(84) Benannte Vertragsstaaten: **DE FR GB IT SE**

(71) Anmelder: **Siemens Bauelemente OHG, Unterlaufenegger Strasse, A-8530 Deutschlandsberg (AT)**

(84) Benannte Vertragsstaaten: **AT**

(72) Erfinder: **Kahr, Werner, Ziegeleiweg 2, A-8530 Deutschlandsberg (AT)**

(54) Bauelementekombination für eine Schaltungsanordnung zum kombinierten Schutz eines Verbrauchers vor Überspannung und Überstrom.

(57) Die Bauelementekombination für eine Schaltungsanordnung zum kombinierten Schutz eines Verbrauchers (V) vor Überspannung und Überstrom durch einen dem Verbraucher (V) parallel geschalteten Varistor (1) enthält einen scheibenförmigen keramischen Varistor (1) und beiderseits von ihm angeordnete scheibenförmige keramische Kaltleiter (2, 3), wobei zwei äussere Stromzuführungen (8, 9) mit den Kaltleitern (2, 3) verbunden sind und die zwischen dem Varistor (1) und den Kaltleitern (2, 3) befindlichen Stromzuführungen (10, 11) jeweils sowohl den elektrischen Kontakt als auch die thermische Kopplung bewirken.

EP 0 103 180 A1

0103180

SIEMENS AKTIENGESELLSCHAFT     Unser Zeichen
Berlin und München             VPA  82 P 7045 E

Bauelementekombination für eine Schaltungsanordnung zum kombinierten Schutz eines Verbrauchers vor Überspannung und Überstrom.

Die Erfindung betrifft eine Bauelementekombination für eine Schaltungsanordnung zum kombinierten Schutz eines Verbrauchers, insbesondere in Geräten und Anlagen der Nachrichtenelektronik, vor Überspannung und Überstrom durch einen zum Verbraucher parallelgeschalteten Varistor, die scheibenförmige keramische elektrische Widerstandselemente (Bauelemente) enthält, die miteinander elektrisch und thermisch gekoppelt sind, indem die Bauelemente durch Druckkontakt zwischen an den äußeren Belegungen der Bauelemente anliegenden Stromzuführungen klemmend gehalten sind, die Stromzuführungen zwischen den Bauelementen großflächig, praktisch die gesamte Fläche der Gegenbelegungen berührend, nicht fest verbunden eingefügt sind, die gesamte Anordnung in einem Gehäuse untergebracht ist und die Stromzuführungen mit Zuleitungen versehen sind, die durch Öffnungen in dem Gehäuse hindurchreichen und Anschlußfahnen (Kontaktstifte) darstellen.

In dem Buch: "Siemens, Bauelemente, Technische Erläuterungen und Kenndaten für Studierende", 2. Auflage, S. 545-550, ist beschrieben, was ein Varistor ist, nämlich ein spannungsabhängiger elektrischer Widerstand (VDR, voltage dependent resistor). Sofern im Zusammenhang mit der vorliegenden Erfindung von einem Varistor die Rede ist, so ist hierunter ein dermaßen definierter elektrischer Widerstand zu verstehen.

Bck 1 Sti/23.7.82

In dem genannten Buch ist auf den Seiten 548 bis 550 auch die Funktion eines solchen Varistors zum Überspannungsschutz beschrieben, wobei als Anwendungsgebiete Versorgungssysteme, Kommunikationssysteme, Verkehrslenkung, Signalanlagen, Überwachung, Fernwirkanlagen, Steuergeräte, Computer, Schweißtechnik, Autoelektrik, Fernsehen, Radio, elektrische Uhren, Haushaltsgeräte angegeben sind. Für die Stoßspannungsbegrenzung, z.B. zur Absorption von Schaltenergie oder zur Begrenzung von Blitz-Stoßspannungen, sind auf Seite 550 Schaltungsanordnungen dargestellt und weitere Schutzfunktionen beschrieben, für die ein Varistor eingesetzt werden kann. So können Transistoren, Thyristoren, Dioden und andere überspannungsempfindliche Bauteile, Kontakte und Schalter gegen Abbrand, geschaltete Transformtoren und angeschlossene Bauteile geschützt werden, ferner kann mit einem Varistor gegen Blitzbeeinflussung, gegen über Verbindungs- und Versorgungsleitungen herangeführte Überspannungen und gegen induktiv oder kapazitiv eingekoppelte Überspannungsspitzen geschützt werden. In aller Regel ist der Varistor zum Verbraucher parallel geschaltet.

Es ist auch ein Schutzmodul für Telefonapparate bekannt (Prospekt der Fa. R.T.C. - Philips - "MODULE DE PROTECTION-DE POSTE D'ABONNE", 1981), bei dem zum zu schützenden Apparat ein Varistor parallel geschaltet ist, der thermisch und elektrisch mit zwei Kaltleitern verbunden ist, so daß die Erwärmung des Varistors die Ansprechzeit der beiden Kaltleiter verkürzt. Der Modul besteht aus zwei scheibenförmigen keramischen Kaltleitern, zwischen denen eine Isolierung angebracht ist, und die je eine zentrale Öffnung aufweisen, in denen durch die Isolierung hindurch ein stabförmiger Varistor eingesetzt ist. Diese konstruktive Gestaltung des Moduls gewährleistet keinen ausreichenden Wärmekontakt zwischen dem Varistor und den keramischen Kaltleitern, weil die Wärmeübergangsfläche gering ist und das Volumen der Kaltleiter im Verhältnis zu dieser Wärmeübergangs- fläche sehr groß ist. Hierdurch ist die Abkühlzeit, die zwischen zwei Stromstößen
erforderlich ist, relativ lang; im genannten Prospekt
wird hierfür eine Minimalzeit von einer Minute angegeben.

In dem obengenannten Buch ist auf den Seiten 532 - 544
unter Bezugnahme auf die deutsche Norm DIN 44080 vom
Dezember 1976 auch beschrieben, was unter einem Kaltleiter (auch PTC-Widerstand oder Thermistor genannt) zu
verstehen ist. Es ist dies ein keramischer elektrischer
Widerstand aus dotierter polykristalliner Titanatkeramik.
Dieser keramische elektrische Widerstand hat in einem
bestimmten Temperaturbereich, der für den jeweiligen
Kaltleitertyp charakteristisch ist, einen sehr hohen
positiven Widerstands-Temperaturkoeffizienten und einen
Widerstandsanstieg von mehreren Zehnerpotenzen.

Sofern im Zusammenhang mit der vorliegenden Erfindung
von Kaltleitern die Rede ist, so sind die dermaßen definierten keramischen elektrischen Widerstandselemente
gemeint.

In der nicht vorveröffentlichten DE-OS 31 12 556 sind
eine Schaltungsanordnung zum zweipoligen Zu- oder Abschalten eines Verbrauchers und eine Bauelementekombination für diese Schaltungsanordnung beschrieben. Bei
dieser Bauelementekombination sind beiderseits wenigstens
eines keramischen Kaltleiters je ein Bimetallschalter angeordnet und es sind vier Stromzuführungen vorhanden,
von denen die äußeren Stromzuführungen mit den Bimetallschaltern und die zwischen dem oder den keramischen Kaltleitern und den Bimetallschaltern befindliche Stromzuführungen jeweils sowohl deren elektrische als auch deren
thermische Kopplung bewirken. Die Aufgabe dieser bekannten Bauelementekombination unterscheidet sich grundsätzlich von der der vorliegenden Erfindung, denn es wird
die auf die Bimetallschalter wirkende aufheizende

Funktion des keramischen Kaltleiters ausgenutzt.

Der vorliegenden Erfindung liegt die Aufgabe zugrunde, die Bauelementekombination der eingangs angegebenen Art so zu verbessern, daß größere und damit wirkungsvollere Übergangsflächen möglich sind, und daß keramische Kaltleiter mit wesentlich kürzerer thermischer Abkühlzeitkonstante verwendet werden können.

Zur Lösung dieser Aufgabe ist die Bauelementekombination der eingangs angegebenen Art erfindungsgemäß dadurch gekennzeichnet, daß beiderseits eines scheibenförmigen keramischen Varistors je ein scheibenförmiger keramischer Kaltleiter angeordnet ist und vier Anschlußfahnen vorhanden sind, die mit den vier Stromzuführungen verbunden sind, von denen die äußeren Stromzuführungen mit den Kaltleitern und die zwischen dem Varistor und den Kaltleitern befindliche Stromzuführungen jeweils sowohl deren elektrische als auch deren thermische Kopplung bewirken.

Vorzugsweise wird als Varistor ein durch Sintern hergestellter Metalloxidvaristor eingesetzt, insbesondere ein Varistor auf der Basis gesinterten Zinkoxids mit Beimengungen anderer Metalloxide.

Ferner ist es vorteilhaft, als keramische Kaltleiter solche mit gleichen Kennwerten einzusetzen, wobei deren Bezugstemperatur zwischen 40 und 180°C liegt.

Durch die Erfindung wird der Vorteil erzielt, daß infolge der gegenüber dem Stand der Technik wesentlich größeren Wärmeübergangsflächen ein Varistor und/oder Kaltleiter eingesetzt werden können, deren Widerstandswert bei 25°C für den jeweiligen Anwendungsfall frei wählbar ist, wobei dennoch keramische elektrische Widerstandselemente mit kurzen Ansprechzeiten und insbesondere mit einer geringen thermischen Abkühlzeitkonstanten eingesetzt werden können. Ferner kann die Aufheizung der keramischen Kaltleiter durch den Varistor und
umgekehrt des Varistors durch die keramischen Kaltleiter
in gleichem Maße und mit gutem Wärmeaustausch stattfinden.

Ein solcher Wärmeaustausch in beiden Richtungen gewährleistet auch einen gleichermaßen guten Schutz vor Überspannung und vor Überstrom.

Mit besonderesm Vorteil ist die Bauelementekombination
in einem Gehäuse untergebracht, das in der EP-OS 0 043 914
für eine Schalteinrichtung zum verzögerten Schalten eines
Verbrauchers (vgl. auch DE-OS 30 29 796 und DE-Gbm
80 21 087) und auch in der nicht vorveröffentlichten DE-OS
31 12 556 für eine Bauelementekombination für eine Schaltungsanordnung zum zweipoligen Zu- oder Abschalten eines
Verbrauchers beschrieben ist. Die Bauelemente sind dabei
unter Zwischenlage einer elektrisch gut leitenden, großflächigen Mittelelektrode thermisch miteinander gekoppelt
und diese Anordnung ist im zusammengeklemmten Zustand in
einem Kunststoff-Formgehäuse eingesetzt, wobei das Kunststoff-Formgehäuse ein Becher ist, der an seiner Wandung
wenigstens einen Schlitz zur Durchführung der Anschlußfahnen der mittleren Stromzuführung und der äußeren Stromzuführungen aufweist. Als Verschluß des Bechers dient
eine Klammer, die insgesamt U-förmig ist, aus gute Federeigenschaften besitzendem Werkstoff besteht und zwei von
einem Einbuchtungsteil abstehende Schenkel enthält, der
Einbuchtungsteil durch zwei querstehende, gegebenenfalls
leicht wellenförmige Knickungen gebildet ist, um die von
der Klammer auf das Widerstandselement und das Schaltelement ausgeübte Federvorspannung zu erhöhen und die
Klammer, ferner Schlitze bzw. Abbiegungen in bzw. an
ihren Schenkeln aufweist. Der Becher weist Ansätze bzw.
Vertiefungen an seinem Boden auf, in die die Schlitze
der Schenkel eingreifen bzw. um die die Abbiegungen

0103180

herumgreifen.

Die Erfindung wird nachfolgend anhand der beigefügten Zeichnungen erläutert.

Figur 1 zeigt die elektrische Verschaltung zum Schutz des Verbrauchers V und

Figur 2 zeigt die Anordnung der elektrischen Bauelemente gemäß der Erfindung.

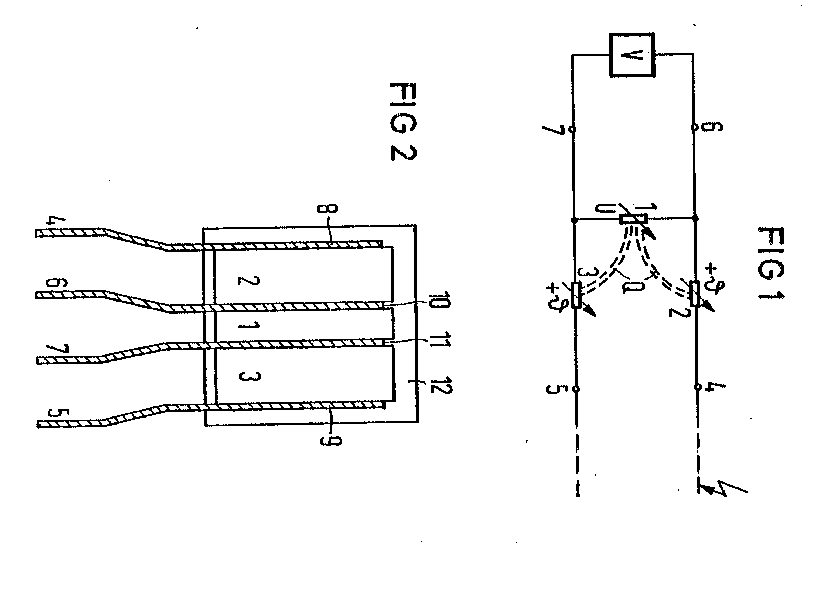

In Figur 1 ist der Varistor 1 parallel zum Verbraucher V geschaltet. Die keramischen Kaltleiter 2 und 3 liegen im Stromkreis in Reihe mit dem Verbraucher V. Über die Anschlußfahne 4 und 5 und die keramischen Kaltleiter 2 und 3 wird der Strom dem Verbraucher V zugeführt, der mit seinen beiden Anschlüssen mit den Anschlußfahnen 6 und 7 verbunden ist. Der Varistor 1 ist mit den keramischen Kaltleitern 2 und 3 thermisch gekoppelt. Dies ist durch die gestrichelten und mit Q bezeichneten Linien dargestellt.

In Figur 2 ist gezeigt, daß zu beiden Seiten des Varistors 1 die keramischen Kaltleiter 2 und 3 angeordnet sind. Die äußeren, praktisch die gesamte Fläche der keramischen Kaltleiter 2 und 3 bedeckenden Stromzuführungen 8 und 9 sind mit den Anschlußfahnen 4 und 5 verbunden, während die zwischen den Varistor 1 und die beiden keramischen Kaltleiter 2 und 3 zwischengefügten Stromzuführungen 9 und 10 mit den Anschlußfahnen 6 und 7 verbunden sind. Die Stromzuführungen 9 und 10 sind ebenfalls großflächig und gewährleisten einen guten Wärmeübergang entweder vom Varistor 1 zu den beiden keramischen Kaltleitern 2 und 3 oder umgekehrt.

Die gesamte Anordnung aus dem Varistor 1, den Stromzuführungen 10 und 11, den keramischen Kaltleitern 2 und 3 und den Stromzuführungen 8 und 9 sind in einem Gehäuse

0103180

12 untergebracht und werden klemmend zusammengehalten.

Ein solches Gehäuse ist - wie oben ausgeführt - in der EP-OS 0 043 914 beschrieben.

Wenn nun in der Stromzuleitung ein Überstrom oder eine Überspannung auftreten, angedeutet in Figur 1 durch das Blitz-Zeichen, dann werden bei einem Überstrom die Kaltleiter 2 und 3 hochohmig und damit praktisch nicht leitend und gleichzeitig auch erwärmt. Durch diese Erwärmung wird auch der Varistor 1 erwärmt und in diesem erwärmten Zustand gut leitend. Andererseits wird bei einer plötzlich auftretenden Überspannung der Varistor 1 niederohmig, weil bei einem Varistor mit zunehmender Spannung die Leitfähigkeit zunimmt. Eine Überspannung gelangt somit nicht oder nur zu einem sehr geringen Anteil zum Verbraucher V.

3 Patentansprüche
2 Figuren

0103180

82 P 7045 E

Patentansprüche

1. Bauelementekombination für eine Schaltungsanordnung zum kombinierten Schutz eines Verbrauchers, insbesondere in Geräten und Anlagen der Nachrichtenelektronik, vor Überspannung und Überstrom durch einen zum Verbraucher parallelgeschalteten Varistor, die scheibenförmige keramische elektrische Widerstandselemente (Bauelemente) enthält, die miteinander elektrisch und thermisch gekoppelt sind, indem die Bauelemente durch Druckkontakt zwischen an den äußeren Belegungen der Bauelemente anliegenden Stromzuführungen klemmend gehalten sind, die Stromzuführungen zwischen den Bauelementen großflächig, praktisch die gesamte Fläche der Gegenbelegungen berührend, nicht fest verbunden eingefügt sind, die gesamte Anordnung in einem Gehäuse untergebracht ist und die Stromzuführungen mit Zuleitungen versehen sind, die durch Öffnungen in dem Gehäuse hindurchreichen und Anschlußfahnen (Kontaktstifte) darstellen, d a d u r c h   g e k e n n z e i c h n e t , daß beiderseits eines scheibenförmigen keramischen Varistors (1) je ein scheibenförmiger keramischer Kaltleiter (2, 3) angeordnet ist und vier Anschlußfahnen (4, 5, 6, 7) vorhanden sind, die mit den vier Stromzuführungen (8, 9, 10, 11) verbunden sind, von denen die äußeren Stromzuführungen (8, 9) mit den Kaltleitern (2, 3) und die zwischen dem Varistor (1) und den Kaltleitern (2, 3) befindlichen Stromzuführungen (10, 11) jeweils sowohl deren elektrische als auch deren thermische Kopplung bewirken.

2. Bauelementekombination nach Anspruch 1,  d a d u r c h   g e k e n n z e i c h n e t ,  daß als Varistor (1) ein durch Sintern hergestellter Metalloxid-Varistor eingesetzt ist.

3. Bauelementekombination nach Anspruch 1 oder 2,  d a d u r c h   g e k e n n z e i c h n e t ,   daß als

keramische Kaltleiter (2, 3) solche mit gleichen Kennwerten eingesetzt sind, wobei deren Bezugstemperatur
zwischen 40 und 180°C liegt.

## FIG 1

## FIG 2

Europäisches
Patentamt

EUROPÄISCHER RECHERCHENBERICHT

0103180

Nummer der Anmeldung

EP 83 10 7966

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | US-A-4 152 743 | 2 | H 02 M 9/02<br>H 02 M 9/04<br>H 01 C 7/02 |
| Y | * Spalte 3, Zeile 43 - Spalte 4, Zeilen 7-32; Figuren 1, 2 *<br>--- | 1 | |
| Y | US-A-3 914 727 (J.H. FABRICIUS)<br>* Spalte 5, Zeilen 1-33; Figur 4 *<br>--- | 1 | |
| Y | US-A-3 644 864 (H.G. HIRSBRUNNER et al.)<br>* Spalte 8, Zeilen 21-47; Figuren 5, 13 *<br>--- | 1 | |
| P,Y | GB-A-2 099 220 (MURATA MANUFACTURING)<br>* Anspruch 4; Figuren 6, 7 *<br>--- | 1 | |
| P,D<br>A | DE-A-3 112 556 (SIEMENS AG)<br><br>* Zusammenfassung; Figur 3 *<br>--- | | H 01 C 7/02<br>H 02 H 9/02<br>H 02 H 9/04 |
| D,A | EP-A-0 043 914 (SIEMENS AG)<br><br>* Zusammenfassung *<br>----- | | |

RECHERCHIERTE SACHGEBIETE (Int. Cl. 3)

Der vorliegende Recherchenbericht wurde für alle Patentansprüche erstellt.

| Recherchenort | Abschlußdatum der Recherche | Prüfer |
|---|---|---|
| BERLIN | 18-11-1983 | LEMMERICH J |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503. 03.82